# EUROPEAN PATENT SPECIFICATION

(11) **EP 0 459 302 B1**
(45) Date of publication and mention of the grant of the patent: **09.11.1994**
(21) Application number: 91108364.0
(22) Date of filing: 23.05.1991
(51) Int. Cl.: B60S 1/38

(54) **Mounting device of anti-lift fin for wiper**
Wischer-Hebeschutz-Schaufel-Montagevorrichtung
Dispositif de montage de l'aile anti-soulèvement pour essuyeur

(30) Priority: 29.05.1990 JP 56079/90 U
(43) Date of publication of application: 04.12.1991
(73) Proprietor: ASMO CO., LTD., Kosai-shi Shizuoka-ken (JP)
(72) Inventor: Koumo, Yoshiyuki, Toyohashi-shi, Aichi-ken (JP); Saito, Mitsuhiro, Tahara-cho, Atsumi-gun, Aichi-ken (JP)
(74) Representative: Heim, Hans-Karl, Dipl.-Ing.

(56) References cited:
- FR-A- 2 556 297
- FR-A- 2 621 288

## Description

### BACKGROUND OF THE INVENTION

### Field of the Invention:

The present invention relates to a mounting device of an anti-lift fin on a wiper and particularly to a device for mounting a fin which prevents a wiper blade from being lifted when a vehicle is running.

### Description of the Related Art:

Recently, the angle of a motorcar windshield is decreasing in design. When a wiper device is mounted in such a motorcar windshield, its wiper blades intend to be slightly lifted by air pressure created as the motorcar is running. This is a problem in that the wiping property in the wiper device is reduced. Thus, many vehicle wiper devices are frequently provided with an anti-lift fin.

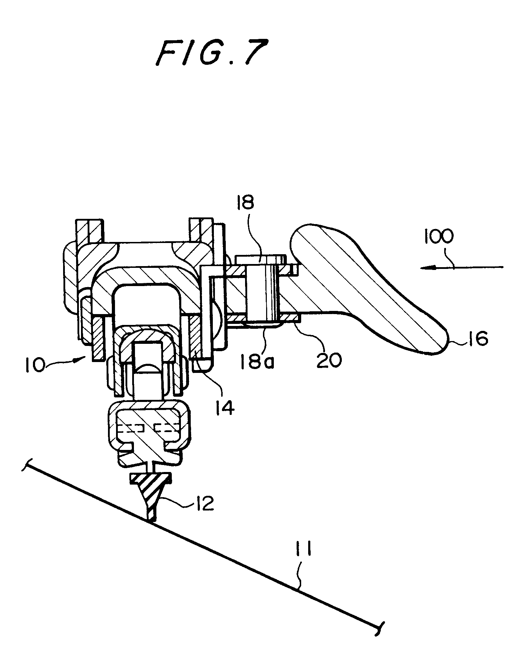

Figure 7 shows, in cross-section, a wiper constructed in accordance with the prior art. The wiper comprises a blade supporting member 10 for supporting a rubber blade member 12 in contact with a windshield 11, the blade supporting member 10 being mounted on an arm member (not shown) which in turn is connected with a wiper drive motor (not shown). The blade supporting member 10 also comprises a anti-lift fin 16 mounted thereon through a stay 14. The anti-lift fin 16 is fixed to the stay 14 through a rivet 18 and a washer 20. More particularly, the rivet 18 is placed through mounting holes in the stay and washer 14, 20 and also passed through a mounting hole in the anti-lift fin 16. The lower end of the rivet 18 exposed out of the underside of the washer 20 is then crimped against the washer 20 at 18a.

The anti-lift fin 16 thus mounted on the wiper functions to press the wiper against the windshield 11 when the wiper is subjected to an air pressure from a direction of arrow 100. thus, the wiper can be prevented from being lifted from the windshield 11.

The anti-lift fin 16 may be mounted on the wiper through any suitable fastening means other than the rivet 18, such as screw means or the like.

Although the aforementioned wiped device having the anti-lift fin constructed according to the prior art has been satisfactorily used, it raises another problem in that such an structure requires an increased number of parts such as rivet 18, washer 20 and others. This also results in increase of the number of manufacturing and assembling steps. As a result, the entire mounting system will be increased in manufacturing cost.

There is also still another problem even if any fastening means other than the rivet is used. For example, if a screw is used to mount the anti-lift fin on the wiper, the screw must be fastened two times in temporally and finally fastening steps. This makes the mounting operation cumbersome. Furthermore, the screw may loosened by variations of ambient temperature.

The FR-A-2 621 288 describes a wiper with an attached anti-lift fin. The anti-lift fin is mounted from the upper side of a wiper blade supporting member and thus, can come off easily by the wind.

### SUMMARY OF THE INVENTION

It is therefore an object of the present invention to provide a new and novel anti-lift fin mounting mounting device for vehicle wipe, which can reduce both the number of parts and the number of assembling steps and yet which can be mounted more easily on the wiper.

To this end, the present invention provides a device of mounting an anti-lift fin on a wiper blade supporting member, said device comprising a stay having a latching hole formed therethrough and a guide member having a projection engaged in the latching hole in said stay and a guide channel into which said stay is inserted to hold it at a fixed position, said stay being disposed on one of said fin and wiper blade supporting member while said guide member is located on the other of said fin and wiper blade supporting member, whereby the engagement of said stay with said guide member can firmly hold said fin on said wiper blade supporting member.

In such an arrangement, the anti-lift fin can be mounted on the wiper blade in an extremely easy and simple manner.

### BRIEF DESCRIPTION OF THE DRAWINGS

Figure 1 illustrates the first embodiment of an anti-lift fin mounting device constructed in accordance with the present invention: Figure 1A is a view showing the entire structure of a wiper; Figure 1B is an enlarged view showing a portion of the wiper encircled by a circle B in Figure 1A in more details; and Figure 1C is a cross-sectional view of the wiper taken along a line C-C in Figure 1B.

Figures 2A and 2B illustrate the stay and guide member in the first embodiment of the present invention.

Figure 3A is a side view of the guide member shown in Figure 2B, as viewed from the leftward direction in Figure 2B.

Figure 3B is a cross-sectional view of the guide member taken along a line B-B in Figure 2B.

Figure 4 is a view showing the stay and guide member in the second embodiment of the present invention.

Figure 5A is a cross-sectional view of the guide member taken along a line A-A in Figure 4.

Figure 5B is a cross-sectional view of the stay taken along a line B-B in Figure 4.

Figure 6 is a view showing the engagement of the stay with the guide member in the second embodiment.

Figure 7 is a cross-sectional view of a wiper including a anti-lift fin constructed in accordance with the prior art.

### DETAILED DESCRIPTION OF THE PREFERRED EMBODIMENTS

The present invention will now be described in detail in connection with some preferred embodiments thereof which are illustrated in the drawings.

### First Embodiment

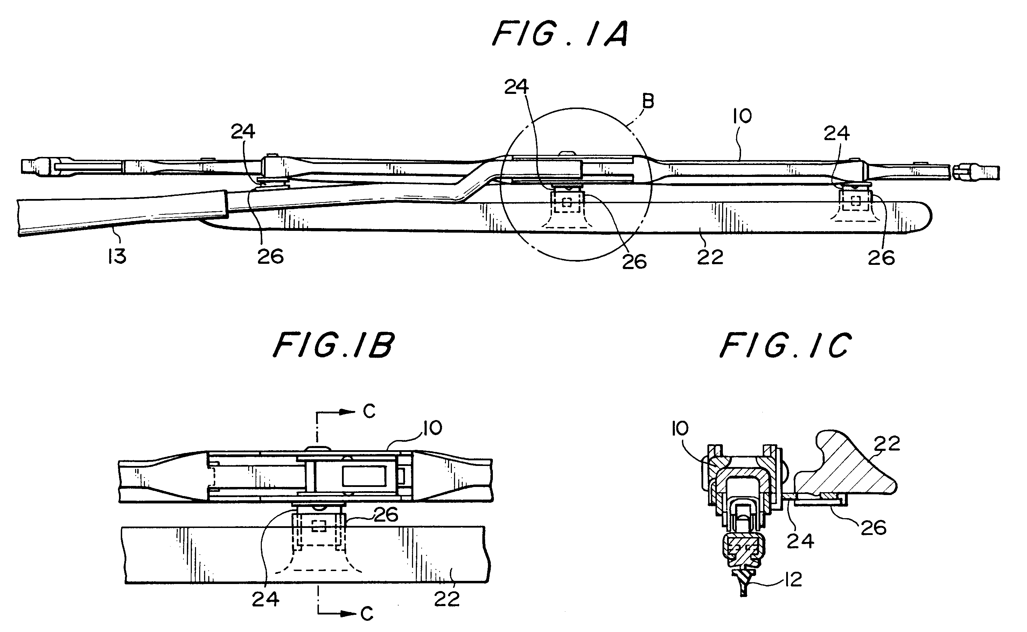

Referring first to Figure 1A, a wiper blade supporting member 10 is fixedly mounted on an arm 13 so as to support a blade member 12, as shown more clearly in Figure 1C. An anti-lift fin 22 is mounted on the blade supporting member 10 in a three-point mounting manner. In the first embodiment, a stay 24 is mounted on the blade supporting member 10 while the anti-lift fin 22 is integrally formed on a guide member 26, as shown more clearly in Figures 1B and 1C.

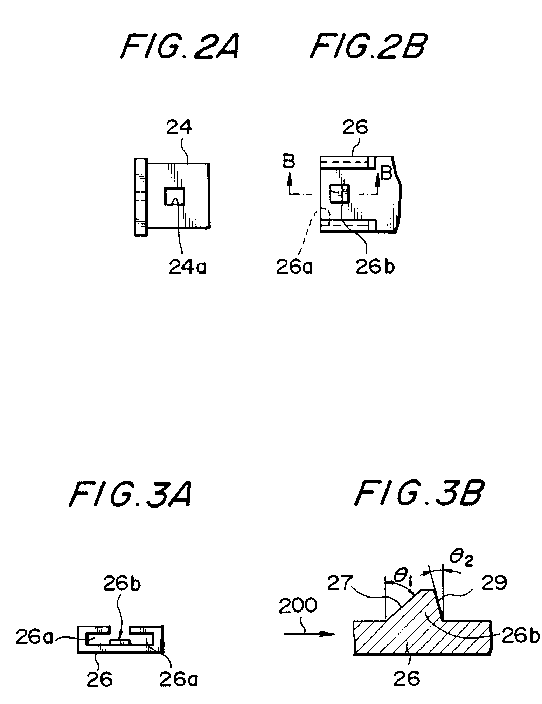

Figures 2 and 3 illustrate the details of the stay and guide member in the first embodiment.

Figure 2A is a plan view of the stay 24 in the form of an L-shaped plate. The horizontal leg of the stay 24 includes a latching hole 24a formed therein at the central portion thereof. The stay 24 is crimped against the blade supporting member 10.

On the other hand, Figure 2B shows the guide member 26 of plastic material which is molded integrally on the anti-lift fin 22. The guide member 26 is formed into a sleeve having a rectangular cross-section and including an opening formed therein at one side. The guide member 26 also includes a pair of inner opposed walls which define a guide channel 26a for receiving the stay 24. The guide member 26 further includes an internal projection 26b formed therein at a position opposite to said opening, the projection being adapted to prevent the stay 24 from being accidentally withdrawn when the stay 24 inserted into the guide channel 26a engages in the latching hole 24a. As can be seen from Figure 3A, the stay 24 is guided by the guide channel 26a such that when the projection 26b of the guide channel 26a engages in the latching hole 24a, the anti-lift fin 22 will be firmly mounted on the blade supporting member 10.

Referring now to Figure 3B, the projection 26b of the guide member 26 includes a first slope 27 opposite to the direction of insertion 200 of the stay 24 and having a gentle angle of incline shown by ϑ₁ in Figure 3B. This first slope 27 functions to facilitate the insertion of the stay 24 into the guide channel 26a. The projection 26 also includes a second slope 29 formed therein the other side thereof opposite to the first slope 27 and having a sharp angle of incline shown by ϑ₂ in Figure 3B. The angle of the second slope 29 may be equal to zero. The second slope 29 serves as a stop for preventing the stay 24 from being easily withdrawn out of the guide channel 26a once the stay 24 has been assembled into the guide channel 26a.

In the first embodiment, there are three combinations of the stays 24 with the guide members 26. Therefore, the anti-lift fin 22 can be mounted on the blade supporting member 10 extremely easily.

In accordance with the principle of the present invention, only one or two combinations of stay with guide member may be used to mount the anti-lift fin on the wiper with the remaining points being replaced by any other suitable fastening means such as rivet or screw. In any event, the number of parts can be reduced with the number of assembling steps.

### Second Embodiment

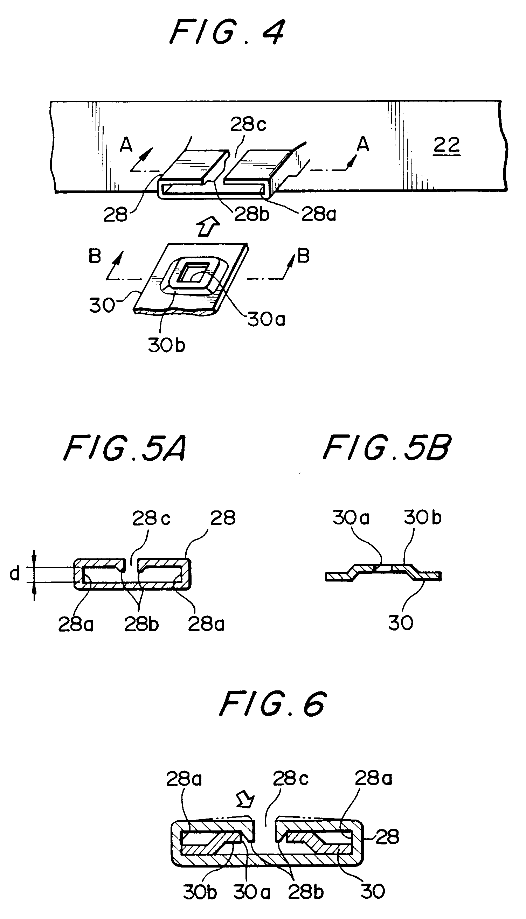

Figures 4 to 6 illustrate the second embodiment of an anti-lift fin mounting device constructed in accordance with the present invention, which is characterized by providing a strengthened connection between the stay and the guide member.

Referring to Figure 4, there is shown a guide member 28 which is formed integrally in an anti-lift fin 22 of plastic material. The guide member 28 is in the form of a sleeve having a rectangular cross-section which includes a slit 28c formed therein at one side. The inner opposed walls of the sleeve define a guide channel 28a. The opposite edges of the slit 28c have projections 28b, respectively. Each of the projections 28b has the same structure as that of the first embodiment, having the first and second slopes (see Figure 3B). On the other hand, a stay 30 formed in a wiper blade includes a raised portion 30b which has a latching hole 30a formed therein at the top thereof. This latching hole 30a is adapted to be engaged, at its opposite edges, by the projections 28b on the guide member 28.

Referring to Figure 5, the guide channel 28a of the guide member 28 has a width d which is designed depending on the height of the latching hole 30a in the stay 30. The engagement of the stay 30 shown in Figure 5B with the guide member 28 of Figure 5A is shown in Figure 6. More particularly, the stay 30 is inserted into the guide channel 28a of the guide member 28 such that the slitted side 28c of the guide member 28 will be pressed up by the raised portion 30b of the stay 30. As a result, the raised portion 30b of the stay 30 will be resiliently held by the slit 28c of the guide member 28. Therefore, the projections 28b of the guide member 28 can be firmly locked in place in the latching hole 30a.

The second embodiment is more advantageous over the first embodiment in that the mounting device according to the second embodiment can accommodate any variability of the width d in the guide channel 28a shown in Figure 5A.

Although the first and second embodiments have been described as to such a structure that the stay 24 or 30 is disposed on the blade supporting member 10 while the guide member 26 or 28 is formed in the anti-lift fin 22, such an arrangement may be inverted with the same advantage that the anti-lift fin 22 can be mounted easily and simply on the blade supporting member 10.

From the foregoing, it will be apparent that since the mounting structure includes a stay having a latching hole formed therein and a guide member having projection means for engaging the latching hole of the stay, the engagement between the stay and the guide member providing an easy and simple attachment of the anti-lift fin to the wiper blade supporting member, the number of parts can be reduced with the number of assembling steps, resulting in provision of a wiper with an improved anti-lift fin means which can be manufactured with lower cost.

According to the aforementioned arrangement in which the guide member includes a slitted opening having, at its edges, projections which are adapted to engage in the latching hole of the stay formed therein at a position raised from the basic plane of the stay, the stay can be joined to the guide member more rigidly while accommodating any variability of the dimensions in the guide channel.

The guide member having two opposite slopes of different incline angles serves as means for facilitating the insertion of the stay into the guide channel of the guide member while firmly maintaining the engagement of the stay with the guide member once the stay has been inserted into the guide channel.

## Claims

1. A device of mounting an anti-lift fin (22) on a wiper blade supporting member (10), said device comprising:
a stay (24) including a latching hole (24a) formed therein; and
a guide member (26) having a guide channel (26a) for receiving said stay (24) and projection means (26b) for engaging in the latching hole (24a) of the stay (24), said guide member (26) being adapted to hold said stay (24) when the stay (24) is inserted into said guide channel (26a),
**characterized in**
one of said stay (24) and said guide member (26) being fixed to a wind-facing side of said wiper blade supporting member (10),
the other of said stay (24) and said guide member (26) being fixed to said anti-lift fin (22),
the engagement between said stay (24) and said guide member (26) providing a firm attachment of said anti-lift fin (22) to said wiper blade supporting member (10).

2. A device as defined in claim 1 wherein said stay (24) is fixed to said wiper blade supporting member (10) and said guide member (26) is fixed to said anti-lift fin (22), the engagement between said stay (24) and said guide member (26) providing a firm attachment of said anti-lift fin (22) to said wiper blade supporting member (10).

3. A device as defined in claim 1 wherein said stay (24) is fixed to said anti-lift fin (22) and said guide member (26) is fixed to said wiper blade supporting member (10), the engagement between said stay (24) and said guide member (26) providing a firm attachment of said anti-lift fin (22) to said wiper blade supporting member (10).

4. A device as defined in any one of claims 1 to 3 wherein said stay (24) is in the form of a plate having a latching hole (24a) and said guide member (26) is in the form of a sleeve having a rectangular cross-section, said sleeve including an opening formed therein at one side.

5. A device as defined in claim 4 wherein said projection means (26b) is formmed in said guide member (26) at its one inner wall opposed to said opening.

6. A device as defined in claim 4 wherein said stay (30) is in the form of a plate having a latching hole (30a) formed therein and said guide member (28) is in the form of a sleeve having a rectangular cross-section, said sleeve including a central slit (28c) formed therein at one side, said slit (28c) including the opposite edges each of which has inwardly extending projection means (28b).

7. A device as defined in claim 6 wherein said plate-like stay (30) includes a raised portion (30b), said latching hole (30a) being formed in said raised portion (30b).

8. A device as defined in any one of claims 1 to 7 wherein said projection means (26b) has a first slope (27) of such an incline angle as facilitates the insertion of said stay (24) into said guide member (26) and a second slope (29) of such an incline angle as prevents said stay (24) from easily disengaging said projection means (26b) once said stay (24) has been inserted into said guide channel (26a) of said guide member (26).

9. A device as defined in any one of claims 1 to 8 wherein a plurality of such stays (24,30) are disposed and a plurality of such guide members (26,28) are arranged corresponding in number to said stays (24,30), the engagement between said stays (24,39) and said guide members (26,28) providing a multi-point attachment of said anti-lift fin (22) to said wiper blade supporting member (10).

## Patentansprüche

1. Eine Vorrichtung zur Montage einer Hebeschutz-Schaufel (22) auf einer Wischerblatt-Trägereinheit (10), wobei die Vorrichtung aufweist:
eine Strebe (24), die eine darin ausgebildete Einklinköffnung (24a) beinhaltet, und
eine Führungseinheit (26) mit einen Führungskanal (26a) zur Aufnahme der Strebe (24) und mit Vorsprungmitteln (26b) zum Eingriff in die Einklinköffnung (24a) der Strebe (24), wobei die Führungseinheit (26) derart angepaßt ist, daß sie die Strebe (24) hält, wenn die Strebe in den Führungskanal (26a) eingesetzt wird,
**dadurch gekennzeichnet,** daß
die eine Strebe (24) bzw. Führungseinheit (26) an einer dem Wind ausgesetzten Seite der Wischerblatt-Trägereinheit (10) befestigt ist,
die andere, Strebe (24) bzw. Führungseinheit (26) an die Hebeschutz-Schaufel (22) befestigt ist,
der Eingriff zwischen der Strebe (24) und der Führungseinheit eine stabile Befestigung der Hebeschutz-Schaufel (22) an die Wischerblatt-Trägereinheit (10) vorsieht.

2. Eine Vorrichtung gemaß Anspruch 1, wobei die Strebe (24) an die Wischerblatt-Trägereinheit (10) befestigt ist und die Führungseinheit (26) an die Hebeschutzschaufel (22) befestigt ist, und der Eingriff zwischen der Strebe (24) und der Führungseinheit (26) eine stabile Befestigung der Hebeschutz-Schaufel (22) an die Wischerblatt-Trägereinheit (10) vorsieht.

3. Eine Vorrichtung gemäß Anspruch 1, wobei die Strebe (24) an die Hebeschutz-Schaufel (22) befestigt ist und die Führungseinheit (26) an die Wischerblatt-Trägereinheit (10) befestigt ist, und der Eingriff zwischen der Strebe (24) und der Führungseinheit (26) eine stabile Befestigung der Hebeschutz-Schaufel (22) an die Wischerblatt-Trägereinheit (10) vorsieht.

4. Eine Vorrichtung gemäß einem der Ansprüche 1 bis 3, wobei die Strebe (24) in Form einer Platte mit einer Einklinköffnung (24a) ausgebildet ist und die Führungseinheit (28) in Form einer Hülse mit einem rechteckförmigen Querschnitt ausgebildet ist, wobei die Hülse eine darin ausgebildete Öffnung an einer Seite beinhaltet.

5. Eine Vorrichtung gemäß Anspruch 4, wobei die Vorsprungmittel (26b) in der Führungseinheit (26) an einer ihrer der Öffnung gegenüberliegenden Innenwand ausgebildet sind.

6. Eine Vorrichtung gemaß Anspruch 4, wobei die Strebe (30) in Form einer Platte mit einer darin ausgebildeten Einklinköffnung (30a) ausgebildet ist und die Führungseinheit (28) in Form einer Hülse mit einem rechteckförmigen Querschnitt ausgebildet ist, wobei die Hülse darin einen an einer Seite ausgebildeten zentralen Schlitz (28c) beinhaltet, und der Schlitz (28c) die gegenüberliegenden Kanten, von denen jede einwärts ragende Vorsprungmittel (28b) hat, einschließt.

7. Eine Vorrichtung gemäß Anspruch 6, wobei die plattenähnliche Strebe (30) einen erhöhten Teil (30b) beinhaltet, und die Einklinköffnung (30a) in dem erhöhten Teil (30b) ausgebildet ist.

8. Eine Vorrichtung gemäß einem der Ansprüche 1 bis 7, wobei die Vorsprungmittel (26b) eine erste Steigung (27) mit einem derartig geneigten Winkel heben, daß das Einsetzen der Strebe (24) in die Führungseinheit (26) erleichtert wird und eine zweite Steigung (29) mit einen derartig geneigten Winkel haben, daß ein leichtes Auslösen der Strebe (24) von den Vorsprungmitteln (26b) verhindert wird, wenn die Strebe (24) in den Führungskanal (26a) der Führungseinheit (26) eingesetzt worden ist.

9. Eine Vorrichtung gemäß einem der Ansprüche 1 bis 8, wobei eine Vielzahl derartiger Streben (24, 30) eingerichtet sind und eine Vielzahl von Führungseinheiten (26, 28) entsprechend der Anzahl von Streben (24,30) angeordnet sind, und der Eingriff zwischen den Streben (24, 39) und den Führungseinheiten (26, 28) eine Mehrfach-Punktbefestigung der Hebeschutz-Schaufel (22) an die Wischerblatt-Trägereinheit (10) vorsieht.

## Revendications

1. Dispositif de montage d'une ailette anti-soulèvement (22) sur un organe (10) de support de lame d'essuie-glace, le dispositif comprenant :
une barrette (24) comportant un orifice de verrouillage (24a) ménagé dans celle-ci ; et
un organe de guidage (26) comportant un canal de guidage (26a) destiné à recevoir la barrette (24) et des moyens formant saillie (26b) destinés à coopérer avec l'orifice de verrouillage (24a), l'organe de guidage (26) étant adapté pour tenir la barrette (24) lorsque la barrette (24) est insérée dans le canal de guidage (26a),
caractérisé en ce que l'un parmi la barrette (24) et l'organe de guidage (26) est fixé sur un côté face au vent de l'organe (10) de support de lame d'essuie-glace,
l'autre parmi la barrette (24) et l'organe de guidage (26) étant fixé sur l'ailette anti-soulèvement (22),
la coopération entre la barrette (24) et l'organe de guidage (26) assurant une liaison solide entre l'ailette (22) anti-soulèvement et l'organe (10) de support de lame d'essuie-glace.

2. Dispositif selon la revendication 1, dans lequel la barrette (24) est fixée sur l'organe (10) de support de lame d'essuie-glace et l'organe (26) de guidage est fixé sur l'ailette (22) anti-soulèvement, la coopération entre la barrette (24) et l'organe de guidage (26) assurant une liaison solide entre l'ailette (22) anti-soulèvement et l'organe (10) de support de lame d'essuie-glace.

3. Dispositif selon la revendication 1, dans lequel la barrette (24) est fixée sur l'ailette (22) anti-soulèvement et l'organe de guidage (26) est fixé sur l'organe (10) de support de lame d'essuie-glace, la coopération entre la barrette (24) et l'organe de guidage (26) assurant une liaison solide entre l'ailette (22) anti-soulèvement et l'organe (10) de support de lame d'essuie-glace.

4. Dispositif selon l'une quelconque des revendications 1 à 3, dans lequel la barrette (24) a une forme de plaque comportant un orifice (24a) de verrouillage et l'organe de guidage (26) a une forme de manchon comportant une section transversale rectangulaire, le manchon comportant une ouverture formée dans un côté de celui-ci.

5. Dispositif selon la revendication 4, dans lequel les moyens formant saillie (26b) sont ménagés sur l'organe de guidage (26) sur sa paroi interne opposée à l'ouverture.

6. Dispositif selon la revendication 4, dans lequel la barrette (30) a une forme de plaque comportant un orifice de verrouillage (30a) ménagé dans celle-ci et l'organe de guidage (28) a une forme de manchon comportant une section transversale rectangulaire, le manchon comportant une fente centrale (28c) ménagée dans un côté de celui-ci, la fente (28c) comportant des bords opposés, chacun deux comportant des moyens (28b) formant saillie s'étendant vers l'intérieur.

7. Dispositif selon la revendication 6, dans lequel la barrette en forme de plaque (30) comporte une partie dressée (30b), l'orifice de verrouillage (30a) étant ménagé dans cette partie dressée (30b).

8. Dispositif selon l'une quelconque des revendications 1 à 7, dans lequel les moyens (26b) formant saillie comportent une première rampe (27) ayant un angle d'inclinaison permettant de faciliter l'insertion de la barrette (24) dans l'organe de guidage (26) et une seconde rampe (29) ayant un angle d'inclinaison permettant d'éviter que la barrette (24) se dégage facilement des moyens (26b) formant saillie lorsque la barrette (24) a été introduite dans le canal de guidage (26a) de l'organe de guidage (26).

9. Dispositif selon l'une quelconque des revendications 1 à 8, dans lequel plusieurs de ces barrettes (24,30) sont disposées et plusieurs de ces organes de guidage (26,28) sont agencés en nombre correspondant aux barrettes (24,30), la coopération entre les barrettes (24,30) et les organes de guidage (26,28) assurant une liaison à points multiples entre l'ailette (22) anti-soulèvement et l'organe (10) de support de lame d'essuie-glace.
